# EUROPEAN PATENT APPLICATION

(11) **EP 2 610 069 A1**
(43) Date of publication of application: **03.07.2013**
(21) Application number: 12198217.7
(22) Date of filing: 19.12.2012
(51) Int. Cl.: B44F 9/04, C04B 111/54, C04B 14/34, C04B 26/18, C04B 26/06

(54) **Artificial marble including cellular metal chips and method for making the same**

(30) Priority: 26.12.2011 KR 20110142050
(71) Applicant: Cheil Industries Inc., Gumi-si Gyeongsangbuk-do 730-030 (KR)
(72) Inventor: Jeong Doo Kyo, Gyeonggi-do (KR); Park Eung Seo, Gyeonggi-do (KR); Son Chang Ho, Gyeonggi-do (KR); Kim Sung Yul, Gyeonggi-do (KR)
(74) Representative: Bublak, Wolfgang

(57) **Abstract**

An artificial marble includes an artificial marble matrix made of a thermosetting resin and metal chips having a cellular structure. The metal chips can be evenly dispersed throughout the artificial marble and can form foam or open-cell patterns.

## Description

The present invention relates to metal chips having a cellular (closed or open cell) structure for artificial marble, an artificial marble using the metal chips and a method for preparing the same.

Artificial marble is an artificial composite in which additives such as natural stone powders, metal, pigments and resin chips are mixed into a base resin such as acrylic resin, unsaturated polyester resin, epoxy resin or cement. Additives can be selected to imitate the texture of natural stone.

For example, acrylic artificial marble can be manufactured by mixing additives with a syrup, which is a mixture of a monomer such as methyl methacrylate and a polymer such as polymethyl methacrylate. A polymerization initiator can be added to the mixture, and this mixture can be cast at an appropriate temperature.

Artificial marble can generally be divided into two groups: solid products and granite-like products in which chips are added. Representative types of these artificial marbles include acrylic artificial marble, polyester artificial marble, melamine artificial marble, and E-stone (Engineered stone) artificial marble.

Artificial marble can have a beautiful appearance, excellent processing capability, and can be light weight with high strength. Therefore artificial marble is used widely as interior / exterior finishing materials, such as surface top materials, dressing tables, counters, wall materials, flooring, and furniture.

To make various colors and patterns in the artificial marble, different types of chips can be introduced during the manufacture of the artificial marble. The appearance of the artificial marble can largely influence the value of the product due to the characteristics of the marble chips used.

Chips can be formed by curing a material such as the acrylic syrup used to make the matrix of an artificial marble into a planer element or article and then crushing the cured article to obtain particle with various sizes.

Conventionally chips are added to a polymer matrix to provide different patterns in the artificial marble. More recently, pigments, metal powders, and pearlescent materials have been coated on the thermosetting resin or crushed chips used to make the artificial marble.

Metal can also be used as chips for artificial marble. Metal chips, however, can break away from the marble surface. Also metal chips can increase the weight of artificial marble, and the metal particles may not be evenly dispersed in the matrix because of the difference between the hardness of the artificial marble and the metal.

Thus, it is the object of the present invention to overcome above disadvantages. Said object has been achieved by providing metal chips with a cellular (closed or open cell) structure for use in an artificial marble and an artificial marble including the same. The metal chips of the invention can address the problems associated with metal chips breaking away from the marble surface. The metal chips of the invention can also help reduce the weight of the artificial marble and can be more evenly distributed within the matrix of the artificial marble.

The artificial marble includes an artificial marble matrix prepared by curing a thermosetting resin with the metal chips having a cellular structure (also referred to herein as foamed metal chips) distributed therein. The metal chips can be evenly dispersed throughout the artificial marble and can form foamed or open-cell patterns therein.

In exemplary embodiments, the metal chips can have an average particle size (diameter) of 2 to 7 mm and air pores located within the metal chip and/or along an outer surface of the metal chip with an average diameter of 0.1 to 5 mm. In exemplary embodiments, the metal chips can have a Barcol hardness (GYZJ 934-1, Barber Colman Company) of 20 to 55.

Examples of the thermosetting resin that can be used to form the artificial marble matrix can include without limitation acrylic resin, unsaturated polyester resin, epoxy resin, copolymers thereof, and the like, and combinations thereof.

One or more additives can also be added to the artificial marble. Examples of the additives include without limitation inorganic fillers, pigments, cross-linking agents, coupling agents, hardening accelerators, fire retardants, antistatic agent, antimicrobial agents, antifoaming agents, dispersing agents, ultraviolet ray absorbents and the like, and combinations thereof.

In the present invention, the artificial marble comprises 1 to 20 parts by weight of the metal chips, 40 to 220 parts by weight of the inorganic fillers, and 0.0001 to 5 parts by weight of the pigments based on 100 parts by weight of the artificial marble matrix.

The artificial marble according to the present invention can be manufactured by mixing foamed metal chips into a thermosetting resin to form a composition for making the artificial marble and curing the composition. The method of preparing the artificial marble may further include a step of defoaming the composition for making the artificial marble. The curing can be carried out at a temperature of 25 to 180 °C.

The present invention can provide an artificial marble which solves the problem of metal chips breaking away from the surface of the marble. The artificial marble can also be light weight and can include evenly dispersed metal chips throughout the matrix thereof.

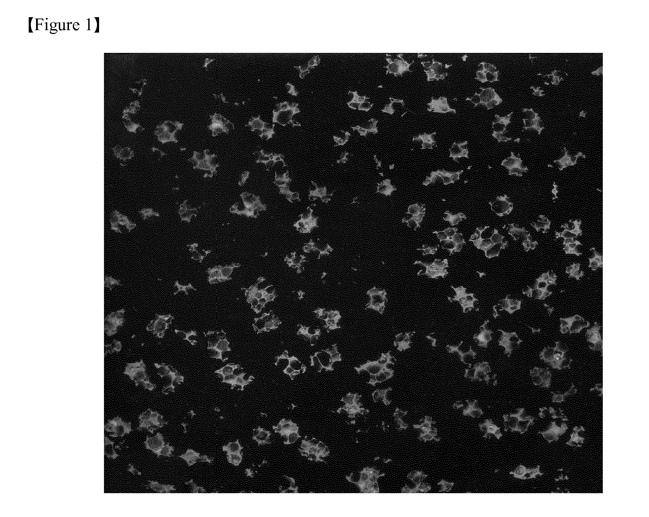

Figure 1 is an illustration of the artificial marble manufactured by the exemplary embodiment 2 in accordance with the present invention.

The present invention will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention uses metal chips with a cellular structure (closed or open cell) in the manufacture of artificial marble. This can minimize or eliminate the problem of breakage of surface chips (breaking away of metal chips along the outer surface of the artificial marble). The artificial marble also can be light weight and can include metal chips that are substantially evenly distributed or dispersed throughout the matrix of the artificial marble.

### Artificial marble

The artificial marble in accordance with this invention includes cellular (closed or open-cell) metal chips (also referred to herein as foamed metal chips) distributed in a thermosetting resin matrix. By using foamed metal chips, the problem of breaking away of surface chips can be solved, the weight of the artificial marble can be reduced, and the metal particles can be evenly dispersed throughout the artificial marble.

Prior metal chips used in the manufacture of artificial marble can break away from the marble surface. Further the weight of the artificial marble cannot be reduced, and also it is difficult to evenly disperse or distribute conventional metal chips within the matrix of the artificial marble. In accordance with this invention, the aforementioned problems may be solved by the use of foamed metal chips.

Examples of metals which can normally be used in the chips for making artificial marbles include without limitation copper, aluminum, nickel, and the like, and combinations thereof. The types of metals that can used, however, are not limited to the metals listed herein and any metal which can be foamed or converted to have a cellular structure can be used.

The metal can be foamed using known techniques. Foamed metal chips are also commercially available. The skilled artisan will understand how to make foamed metal chips using conventional materials (metals, metal foaming agent), equipment (furnaces, crushers), and process conditions (time, temperature). Accordingly, a detailed description of the manufacture of foamed metal chips is not included.

For example, metal in the form of a plate and a metal foaming agent as known in the art can be introduced into a melting furnace also as known in the art and subjected to conditions (time and temperature) to impart a cellular structure to the metal plate (to foam the metal). The plate can then be cut into specific thicknesses and subsequently crushed using suitable equipment known in the art such as a crusher to manufacture metal chips of specific dimensions. In exemplary embodiments, aluminum particles may be used to make the foamed metal chips. Foamed aluminum plate which is used as a reinforcing material may also be used by crushing it in a crusher.

The average diameter of the metal chips can be 2 to 7 mm, and the average diameter of the air pores (cells) inside as well as outside the chips can be 0.1 to 5 mm.

When the average diameter of the metal chips and the diameter of the air pores positioned on the inside and outside portion of the metal chips are within these ranges, the strength, light weight characteristics, and the abrasion property of these metal chips can be excellent.

In addition, the metal chips can have a Barcol hardness (GYZJ 934-1, Barber Colman Company) of 20 to 55. If Barcol hardness of the metal chips is below 20, the foam or open-cell structure can be broken. If Barcol hardness is greater than 55, then the metal chips particles may be broken away or abrasive paper may be damaged during polishing of the artificial marble.

The thermosetting resins which can be used in making artificial marble in accordance with the present invention are not specifically limited. Examples of the thermosetting resins include without limitation acrylic resins, unsaturated polyester resins, epoxy resins, copolymers thereof, and the like, and combinations thereof.

In exemplary embodiments, the thermosetting resin can include acrylic resin. The thermosetting resin can also be formed as an acrylic syrup including acrylic based monomers and macromolecules. Oligomers or polymers of oligomers may be used as the macromolecules. Combinations of monomers and/or macromolecules can also be used

Examples of the acrylic monomers include without limitation acrylic acid, methyl acrylate, ethyl acrylate, isopropyl acrylate, *n*-butyl acrylate, 2-ethylhexylacrylate, methacrylic acid, methyl methacrylate, ethyl methacrylate, isopropyl methacrylate, *n*-butyl methacrylate, 2-ethylhexyl methacrylate, and the like, and combinations thereof. In exemplary embodiments, the acrylic monomer can include methyl methacrylate.

Examples of the acrylic macromolecules can include without limitation oligomers and/or polymers of the acrylic monomers described herein, as well as combinations thereof. In exemplary embodiments, the syrup can include polymethylmethacrylate (PMMA).

In exemplary embodiments, the thermosetting resin can be an acrylic resin in the form of syrup including 65 to 95 % by weight of acrylic monomers and 5 to 35 % by weight of acrylic polymers melted together.

The types of the unsaturated polyester resins are not specifically limited. Unsaturated polyester resins can be manufactured through condensation of saturated and/or unsaturated dibasic acid and polyhydric alcohols. Examples of the saturated and/or unsaturated dibasic acid include without limitation maleic anhydride, citraconic acid, fumaric acid, itaconic acid, phthalic acid, phthalic anhydride, isophthalic acid, terephthalic acid, succinic acid, adipic acid, sebacic acid, tetrahydrophthalic acid, and the like, and combinations thereof.

Examples of polyhydric alcohols include without limitation ethylene glycol, diethylene glycol, triethylene glycol, propylene glycol, dipropylene glycol, tripropylene glycol, polypropylene glycol, 1,3-butylene glycol, hydrogenated bisphenol A, triethylol propane monoarylate, neopentyl glycol, 2,2,4-trimethyl-1,3-pentadiol, glycerin, and the like, and combinations thereof.

Also, if required, a monobasic acid such as but not limited to acrylic acid, propionic acid, benzoic acid, and the like, and polybasic acids such as but not limited to trimellitic acid, tetracarbonic acid of benzol and the like, can also be used, singly or in combination.

The types of epoxy resin are not specifically limited, and practically any difunctional or multifunctional expoxy resin can be used. Examples of the difunctional or multifunctional epoxy resins include bisphenol A epoxy resin, bisphenol S epoxy resin, tetraphenyl ethane epoxy resin, phenol novolac type epoxy resin, and the like, and combinations thereof.

The artificial marble can include the foamed metal chips in an amount of 1 to 20 parts by weight based on 100 parts by weight of the artificial marble matrix.

When the artificial marble includes the foamed metal chips in an amount within the above range, the strength, abrasion property, moldability, and the appearance of the artificial marble can be excellent.

The artificial marble in accordance with this invention can also include inorganic fillers and/or pigments. The inorganic fillers can include any inorganic powders which are commonly used in this field. Examples of inorganic powders that can be used as inorganic fillers include without limitation calcium carbonate, aluminum hydroxide, silica, alumina, barium sulphate, magnesium hydroxide, and the like, and combinations thereof. The inorganic fillers can have an average diameter of 1 to 100 µm In exemplary embodiments, the inorganic powder can include aluminum hydroxide, because it can make the artificial marble transparent and beautiful.

The artificial marble can include the inorganic fillers in an amount of 40 to 220 parts by weight based on 100 parts by weight of the artificial marble matrix

The pigments include organic pigments, inorganic pigments, and combinations thereof, and are not specifically limited. Examples of the pigments include without limitation white zinc oxides, black iron oxides, carbon black, and the like, and combinations thereof. Other organic and/or inorganic pigments with various hues can be also included.

The artificial marble can include pigments in an amount of 0.0001 to 5.0 parts by weight based on 100 parts by weight of the artificial marble matrix.

The artificial marble can further include one or more other additives. Examples of the other additives include without limitation cross-linking agents, polymerization initiators, coupling agents, hardening accelerators, fire retardants, antistatic agents, antimicrobial agents, antifoaming agents, dispersing agents, ultraviolet rays absorbents, and the like, and combinations thereof. These additive(s) are known in the art and can be used in conventional amounts.

Examples of the cross-linking agents include without limitation multifunctional methacrylates such as ethylene glycol dimethacrylate, propylene glycol dimethacrylate, glycerol trimethacrylate, trimethyl propane trimethacrylate, bisphenol A dimethacrylate, and the like, and combinations thereof. The cross-linking agents can be used in an amount of 0.1 to 5.0 parts by weight based on 100 parts by weight of the artificial marble matrix.

Examples of the polymerization initiators include without limitation peroxides such as benzoyl peroxide, lauroyl peroxide, butyl hydro peroxide, and cumyl hydroperoxide; azo compounds such as azo iso butyro nitrile; and the like, and combinations thereof. Also accelerators which enhance polymerization speed, such as but not limited to organic metal salts or organic amines, can be added in conventional amounts. The polymerization initiator can be used in an amount of 0.1 to 5.0 parts by weight based on 100 parts by weight of the artificial marble matrix.

The coupling agent is used to help bonding between the inorganic fillers and the resins and are known in the art. Examples of the coupling agents include without limitation 3-(trimethoxyaryl)propylmethacrylate, vinyltrimethoxy silane, vinyl triethyl silane, and the like, and combinations thereof. The coupling agent can be used in an amount of 0.1 to 5.0 parts by weight based on 100 parts by weight of the artificial marble matrix.

The artificial marble in accordance with this invention may comprise 100 parts by weight of the artificial marble matrix, 1 to 20 parts by weight of the metal chips, 40 to 220 parts by weight of the inorganic fillers, and 0.0001 to 5 parts by weight of the pigments.

### Method of manufacture of the artificial marble

The invention also provides a method of manufacturing the artificial marble. The method includes mixing foamed metal chips into a resin to make a composition for making artificial marble, and then solidifying (curing) the composition to make the artificial marble.

The foamed metal chips for making the artificial marble can be used in an amount of 1 to 20 parts by weight based on 100 parts by weight of the resin. When the metal chips are included in an amount within this range, the strength, abrasion property, light weight, moldability, and the appearance of the artificial marble can be excellent.

The composition of the artificial marble can be defoamed and then cured. The defoaming step can be carried out using conventional techniques known in the art, for example, under a vacuum of 740 mm Hg.

In another embodiment of this invention, the defoaming step can be achieved by using defoaming agents also as known in the art.

The method for solidifying (curing) the composition is not specifically limited. In exemplary embodiments, the composition can be cured at a temperature of 25° to 180 °C for a time sufficient to achieve the desired curing. In addition, amine or sulfonic acid can be added along with hardening agent, or copper, cobalt, calcium, zirconium, or saponification salt of zinc, in order to regulate the solidification property as known in the art.

This invention will be well understood by means of the following exemplary embodiments. The following examples are merely for the purpose of exemplifying this invention and are not intended to limit the scope of protection.

### Examples

### Manufacture of the chips for the artificial marble

### Example 1

Foamed aluminum plate with a size of 600mm x 1,200mm, prepared by foaming aluminum along with a foaming agent, is cut to a thickness of 6mm to 9mm and then cut again to a size of less than 100mm x 100mm. The cut foamed aluminum plate is placed into a crusher and crushed to manufacture aluminum foam chips with an average particle diameter of size of 2mm to 7mm.

### Comparative Example 1

190 parts by weight aluminum hydroxide, 7.0 parts by weight trimethylpropane methacrylate, 1.0 parts by weight calcium hydroxide, 0.4 parts by weight normal-dodecyl mercaptan, 0.1 parts by weight each of antifoaming agents and dispersing agents, and 1.0 parts by weight initiator are added to 100 parts by weight of a syrup prepared by melting polymethylmethacrylate into methylmethacrylate. The mixture is stirred well, vacuum defoamed, and then cured at 60°C before crushing it to make chips for the artificial marble.

### Manufacture of the artificial marble

### Example 2

0.2 parts by weight antifoaming agents (BYK-A515 from BYK Chemie) and 1.0 parts by weight black pigment (KC BK19 from Hankuk Chemical) are added to 100 parts by weight of acrylic resin syrup comprising 16 % by weight of polymethyl methacrylate (IH830 from LG MMA) and 74 % by weight of methyl methacrylate and the mixture is stirred. 210 parts by weight aluminum hydroxide with an average particle size of 45 µm and 10 parts by weight aluminum foam chips (3 to 4 mesh: 5 parts by weight, 4 to 8 mesh: 5 parts by weight) are added into this mixture and the mixture is stirred. The mixture is then subject to vacuuming and defoaming under a vacuum of 740 mm of Hg for 3 min. and stirred for 1 min after adding 1.5 parts by weigh polymerization initiator (CHEMEX-MOM from Dongsung HiChem) to form an artificial marble slurry. The artificial marble slurry is poured into a forming mold to be dispersed evenly and cured inside an oven, the temperature of which is set at 80°C for 1 hour to provide the artificial marble. The resultant artificial marble is polished with emery papers No. 360 and No. 400.

### Comparative Example 2

An artificial marble is manufactured in the same manner as Example 2 except that the chips prepared in Comparative Example 1 are used.

The physical properties of the manufactured artificial marble are measured as follows and the results are presented in Table 1.
(1) Specific gravity: Measured in accordance with the method specified in ASTM D 792.
(2) Barcol hardness: the Barcol hardness is measured for a specimen size of 10×10 cm² using a Barcol harness tester (GYZJ 934-1, Barber Colman Company).
(3) Surface condition: the surface of the artificial marble is examined by the naked eye.

**[Table 1]**

| | Example 1 | Example 2 | Comparative Example 1 | Comparative Example 2 |
|---|---|---|---|---|
| Specific Gravity | 2.2068 | 1.6982 | 1.7000 | 1.7143 |
| Barcol Hardness | 40 | 42 | 45 | 45 |
| Surface Condition | Multi-pore | good | No air pore formed | good |

As illustrated in the above Table, the artificial marble of Example 2 including foamed aluminum chips has a lower specific gravity than the artificial marble of Comparative Example 2 including non-porous acrylic chips.

Many modifications and other embodiments of the invention will come to mind to one skilled in the art to which this invention pertains having the benefit of the teachings presented in the foregoing description. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. An artificial marble comprising metal chips having a cellular structure.

2. The artificial marble of claim 1, wherein the cellular metal chips have an average particle diameter of 2 to 7 mm and an average air pore diameter of 0.1 to 5 mm.

3. The artificial marble of claims 1 or 2, wherein the cellular metal chips have a Barcol hardness (GYZJ 934-1, Barber Colman Company) of 20 to 55.

4. The artificial marble of any one of claims 1 to 3, wherein the cellular metal chips are aluminum.

5. An artificial marble comprising an artificial marble matrix obtainable by curing a composition of a thermosetting resin and metal chips having a cellular structure, wherein the cellular metal chips are evenly dispersed throughout the artificial marble and forms foamed or open-cell patterns therein.

6. The artificial marble of claim 5, wherein the thermosetting resin comprises acrylic resin, unsaturated polyester resin, or a combination thereof.

7. The artificial marble of claims 5 or 6, wherein the artificial marble further includes inorganic fillers and pigments.

8. The artificial marble of any one of claims 5 to 7, wherein the artificial marble further includes a cross-linking agent, polymerization initiator, coupling agent, hardening accelerator, fire retardant, antistatic agent, anti-foaming agent, dispersing agent, ultraviolet radiation absorbent, or a combination thereof.

9. The artificial marble of claim 7 comprising 1 to 20 parts by weight of the metal chips having a cellular structure, 40 to 220 parts by weight of the inorganic fillers, and 0.0001 to 5 parts by weight of the pigments based on 100 parts by weight of the artificial marble matrix.

10. A method for preparing an artificial marble comprising forming a composition including metal chips having a cellular structure mixed into a thermosetting resin and curing the composition.

11. The method for preparing the artificial marble of claim 10, wherein the method further comprises defoaming the composition before curing the composition.

12. The method for preparing the artificial marble of claims 10 or 11, wherein the curing is carried out at a temperature of 25 to 180 °C.

13. Use of metal chips heaving a cellular structure in artificial mable.

14. The use of claim 13 wherein the cellular metal chips have an average particle diameter of 2 to 7 mm and an average air pore diameter of 0.1 to 5 mm.

15. The use of claims 13 and 14 wherein the cellular metal chips have a Barcol hardness (GYZJ 934-1, Barber Colman Company) of 20 to 55.
